(19) Europäisches Patentamt
European Patent Office
Office européen des brevets

(11) EP 3 644 629 A1

(12) **EUROPEAN PATENT APPLICATION**
published in accordance with Art. 153(4) EPC

(43) Date of publication:
29.04.2020 Bulletin 2020/18

(51) Int Cl.:
H04W 4/02 (2018.01)   H04W 12/08 (2009.01)
H04W 48/02 (2009.01)   H04W 48/04 (2009.01)

(21) Application number: 18820664.3

(22) Date of filing: 08.05.2018

(86) International application number:
PCT/CN2018/085983

(87) International publication number:
WO 2018/233391 (27.12.2018 Gazette 2018/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.06.2017 CN 201710471032

(71) Applicant: ZTE Corporation
Shenzhen, Guangdong 518057 (CN)

(72) Inventor: LIU, Peng
Shenzhen
Guangdong 518057 (CN)

(74) Representative: Aipex B.V.
P.O. Box 30223
3001 DE Rotterdam (NL)

(54) **ACCESS CONTROL METHOD, DEVICE AND SYSTEM, AND METHOD AND DEVICE FOR DETERMINING SECURE REGION**

(57) Provided is an access control method. The method includes: acquiring, by a wireless access device, position information of a terminal in a three-dimensional coordinate system established by the wireless access device and an anchor apparatus; determining, according to the position information of the terminal in the three-dimensional coordinate system, whether the terminal is located in a secure region of the wireless access device; and performing, according to a determination result, an access control operation corresponding to the determination result. Further provided are an access control apparatus and system, a wireless access device, a storage medium, and a method and apparatus for determining a secure region.

FIG. 1

## Description

### TECHNICAL FIELD

The present disclosure relates to the field of communications and, for example, to an access control method, apparatus and system and a method and apparatus for determining a secure region.

### BACKGROUND

Currently, a home wireless router generally achieves a secure access of a user and its protection by an access control list (ACL) technology. A media access control (MAC) address list of terminal devices allowed to access the wireless router or a MAC address list of terminal devices forbidden from accessing the wireless router are provided on the wireless router in advance. For the MAC address list of the terminal devices allowed to access the wireless router, the user needs to preset the terminal devices allowed to use the wireless router, and only a terminal device recorded in the MAC address list of the terminal devices allowed to access the wireless router can be connected to the wireless router to surf the Internet. For the MAC address list of the terminal devices forbidden from accessing the wireless router, the user needs to preset the terminal devices forbidden from accessing the wireless router, and only a terminal device which is not in the MAC address list of the terminal devices forbidden from accessing the wireless router can be normally connected to the wireless router to surf the Internet.

However, the technical solution described above cannot be implemented with enough flexibility, a secure access right of the terminal device is in rigid control, and a larger security vulnerability may exist. For example, for a solution in which access control is performed by setting the MAC address list of the terminal devices allowed to access the wireless router, the user needs to know in advance which terminal device should have a connection and access right for the wireless router, and if any terminal device is omitted, the user needs to manually record the omitted terminal device subsequently. For a solution in which the access control is performed by setting the MAC address list of the terminal devices forbidden from accessing the wireless router, the user needs to know in advance which terminal device needs to be forbidden from the connection and access right for the wireless router. Each step in the security control solution described above requires user involvement, and the security vulnerability may be caused due to a human misoperation.

Additionally, even if the access control list technology is used for the wireless router, hackers may perform hacking attacks by disguising a MAC address of a terminal device as a legitimate user. In summary, access security of the wireless router needs to be improved.

## SUMMARY

Embodiments of the present application provide an access control method, apparatus and system and a method and apparatus for determining a secure region, so as to effectively improve access security of a wireless access device.

In a first aspect, an embodiment of the present application provides an access control method. The method includes steps described below.

A wireless access device acquires position information of a terminal in a three-dimensional coordinate system established by the wireless access device and an anchor apparatus.

The wireless access device determines, according to the position information of the terminal in the three-dimensional coordinate system, whether the terminal is located in a secure region of the wireless access device.

The wireless access device performs, according to a determination result, an access control operation corresponding to the determination result.

In a second aspect, an embodiment of the present application provides a method for determining a secure region. The method includes steps described below.

After one or more predetermined terminals are connected to a wireless access device, position information of the one or more predetermined terminals in a three-dimensional coordinate system established by the wireless access device and an anchor apparatus is acquired, where each of the one or more predetermined terminals includes a terminal identified as legitimate by the wireless access device.

According to the acquired position information of the one or more predetermined terminals in the three-dimensional coordinate system, at least one of: establishing a secure region of the wireless access device or adjusting the secure region of the wireless access device, is performed.

In a third aspect, an embodiment of the present application provides an access control apparatus, which is disposed in a wireless access device. The apparatus includes a first positioning module, a secure region detection module and an access control module.

The first positioning module is configured to acquire position information of a terminal in a three-dimensional coordinate system established by the wireless access device and an anchor apparatus.

The secure region detection module is configured to determine, according to the position information of the terminal in the three-dimensional coordinate system, whether the terminal is located in a secure region of the wireless access device.

The access control module is configured to perform, according to a determination result, an access control operation corresponding to the determination result.

In a fourth aspect, an embodiment of the present application provides an apparatus for determining a secure region. The apparatus includes a second positioning module and a processing module.

The second positioning module is configured to: after one or more predetermined terminals are connected to a wireless access device, acquire position information of the one or more predetermined terminals in a three-dimensional coordinate system established by the wireless access device and an anchor apparatus, where each of the one or more predetermined terminals includes a terminal identified as legitimate by the wireless access device.

The processing module is configured to perform, according to the acquired position information of the one or more predetermined terminals in the three-dimensional coordinate system, at least one of: establishing a secure region of the wireless access device or adjusting the secure region of the wireless access device.

In a fifth aspect, an embodiment of the present application provides an access control system. The access control system includes an anchor apparatus and a wireless access device. The wireless access device is configured with the access control apparatus in the third aspect described above, and the anchor apparatus is connected to the wireless access device.

Additionally, an embodiment of the present application further provides a wireless access device. The wireless access device includes a memory, a processor and an access control program stored on the memory and executable by the processor. When executed by the processor, the access control program implements the access control method in the first aspect described above.

Additionally, an embodiment of the present application further provides a machine-readable medium, which is configured to store an access control program. When executed by a processor, the access control program implements the access control method in the first aspect described above.

In the embodiments of the present application, access control is performed based on precise positioning of the terminal and the secure region of the wireless access device, which can effectively ensure that the wireless access device is protected from malicious attacks or a password of the wireless access device is not cracked by a surrounding hacker, thereby improving the access security of the wireless access device. The wireless access device cooperates with the anchor apparatus to position the terminal, thereby improving positioning precision.

In the embodiments of the present application, the wireless access device cooperates with the anchor apparatus to position the predetermined terminals to determine the secure region, improving precision and applicability of the secure region.

## BRIEF DESCRIPTION OF DRAWINGS

FIG. 1 is a flowchart of an access control method according to an embodiment of the present application;

FIG. 2 is a schematic diagram illustrating positions of a wireless access device and anchor apparatus in embodiment 1 of the present application;

FIG. 3 is a schematic diagram in which a wireless access device cooperates with anchor apparatus to determine position information of a terminal in embodiment 1 of the present application;

FIG. 4 is another schematic diagram illustrating positions of a wireless access device and anchor apparatus in embodiment 1 of the present application;

FIG. 5 is a flowchart of a process of establishing and detecting a secure region of a wireless router in embodiment 2 of the present application

FIG. 6 is a schematic diagram of a secure region of a wireless router in embodiment 2 of the present application;

FIG. 7 is a schematic diagram of another secure region of a wireless router in embodiment 2 of the present application;

FIG. 8 is a schematic diagram of another secure region of a wireless router in embodiment 2 of the present application;

FIG. 9 is a flowchart 1 in embodiment 3 of the present application;

FIG. 10 is a flowchart 2 in embodiment 3 of the present application;

FIG. 11 is a flowchart 3 in embodiment 3 of the present application;

FIG. 12 is a schematic diagram of a wireless access device according to an embodiment of the present application;

FIG. 13 is a flowchart of a method for determining a secure region according to an embodiment of the present application; and

FIG. 14 is a schematic diagram of an apparatus for determining a secure region according to an embodiment of the present application.

## DETAILED DESCRIPTION

The steps shown in the flowcharts of the drawings may be performed by a computer system such as a group of computers capable of executing instructions. Although logical sequences are shown in the flowcharts, the shown or described steps may be performed in sequences different from those described herein in some cases.

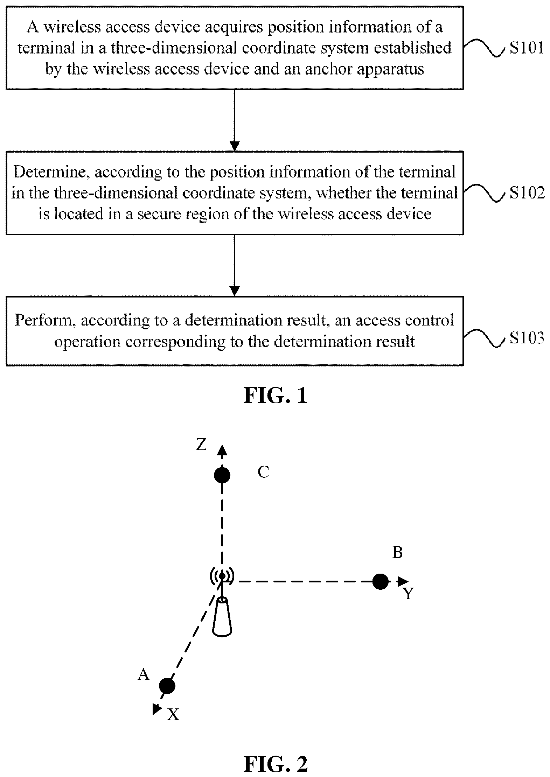

FIG. 1 is a flowchart of an access control method according to an embodiment of the present application. As shown in FIG. 1, the access control method in this embodiment includes steps described below.

In S101, a wireless access device acquires position information of a terminal in a three-dimensional coordinate system established by the wireless access device and an anchor apparatus.

In S102, the wireless access device determines, according to the position information of the terminal in the three-dimensional coordinate system, whether the terminal is located in a secure region of the wireless access device.

In S103, the wireless access device performs, according to a determination result, an access control operation corresponding to the determination result.

In this embodiment, the wireless access device may include at least one of: a wireless router or a customer premise equipment (CPE). The anchor apparatus may refer to a wireless communication device capable of transmitting a positioning signal and a data transmission signal. For example, the anchor apparatus may be a wireless fidelity (WiFi) signal transceiver device, and is configured to perform ranging based on a fine timing measurement (FTM) and transmit measured distance information to the wireless access device through a WiFi signal.

In an exemplary implementation, the method in this embodiment may further include: establishing or adjusting the secure region of the wireless access device by at least one of manners described below.

The secure region of the wireless access device is established or adjusted according to information inputted by a user interface (UI).

The secure region of the wireless access device is established or adjusted according to preset information.

The secure region of the wireless access device is established or adjusted by acquiring position information of one or more predetermined terminals in the three-dimensional coordinate system after the one or more predetermined terminals are connected to the wireless access device, where each of the one or more predetermined terminals includes a terminal identified as legitimate by the wireless access device.

The predetermined terminal may include the terminal identified as legitimate by the wireless access device, for example, a first terminal accessing the wireless access device or a terminal recorded in a MAC address list of terminals allowed to access the wireless access device. However, it is not limited in the present application.

In this implementation, before step S101, the wireless access device may establish the secure region by at least one of the manners described above; subsequently, the wireless access device may adjust the established secure region by at least one of the manners described above. For example, the wireless access device may establish the secure region by acquiring the position information of the one or more predetermined terminals connected to the wireless access device in the three-dimensional coordinate system, and then adjust the established secure region according to the information inputted through the UI, Alternatively, the wireless access device may establish the secure region according to the preset information, and then adjust the established secure region by acquiring the position information of the one or more predetermined terminals connected to the wireless access device in the three-dimensional coordinate system. However, it is not limited in the present application.

In this embodiment, the secure region of the wireless access device is a three-dimensional space. In an exemplary implementation, the secure region may be a three-dimensional space including a horizontal secure region and a vertical secure region. However, it is not limited in the present application.

In an embodiment, a shape of the secure region is not limited in the present application. For example, the horizontal secure region may have a regular shape such as a polygon, a circle, or an ellipse, or another irregular shape.

In an exemplary implementation, the secure region of the wireless access device may be determined by the wireless access device. In this case, the step in which the secure region of the wireless access device is established or adjusted by acquiring the position information of the one or more predetermined terminals in the three-dimensional coordinate system after the one or more predetermined terminals are connected to the wireless access device may include steps described below.

The wireless access device detects a distance between the wireless access device and each of the one or more predetermined terminals and a distance between the wireless access device and the anchor apparatus, and receives a distance between the anchor apparatus and each of the one or more predetermined terminals from the anchor apparatus. Alternatively, the wireless access device detects the distance between the wireless access device and each of the one or more predetermined terminals, and receives the distance between the anchor apparatus and the wireless access device and the distance between the anchor apparatus and each of the one or more predetermined terminals from the anchor apparatus.

The wireless access device may calculate three-dimensional coordinates of the one or more predetermined terminals in the three-dimensional coordinate system established by the wireless access device and the anchor apparatus, that is, acquire the position information of the one or more predetermined terminals in the three-dimensional coordinate system, according to the distance between the wireless access device and each of the one or more predetermined terminals, the distance between the wireless access device and the anchor apparatus, and the distance between the anchor apparatus and each of the one or more predetermined terminals.

In this implementation, in a process of establishing the secure region, the wireless access device may determine the secure region according to position information of multiple legitimate terminals connected to the wireless access device in the three-dimensional coordinate system at a predetermined time point; or the wireless access device may determine the secure region according to position information of the multiple legitimate terminals connected to the wireless access device in the three-dimensional coordinate system at multiple different time points; or the wireless access device may determine the secure region according to position information acquired by one legitimate terminal connected to the wireless access device in a moving process at a predetermined moving speed; or the wireless access device may determine the secure region according to periodic position information of one legitimate terminal connected to the wireless access device. However, it is not limited in the present application.

In an exemplary implementation, the secure region of the wireless access device may be determined by the anchor apparatus, and the anchor apparatus transmits information on the determined secure region to the wireless access device. The anchor point device may establish or adjust the secure region of the wireless access device by manners described below.

The anchor apparatus detects the distance between the anchor apparatus and each of the predetermined terminals and the distance between the anchor apparatus and the wireless access device, and receives the distance between the wireless access device and each of the predetermined terminals from the wireless access device. Alternatively, the anchor apparatus detects the distance between the anchor apparatus and each of the predetermined terminals, and receives the distance between the wireless access device and the anchor apparatus and the distance between the wireless access device and each of the predetermined terminals from the wireless access device.

The anchor apparatus may calculate the three-dimensional coordinates of the predetermined terminals in the three-dimensional coordinate system established by the wireless access device and the anchor apparatus, that is, acquire the position information of the predetermined terminals in the three-dimensional coordinate system, according to the distance between the anchor apparatus and each of the predetermined terminals, the distance between the anchor apparatus and the wireless access device, and the distance between the wireless access device and each of the predetermined terminals.

In an exemplary implementation, the secure region is the three-dimensional space including the horizontal secure region and the vertical secure region. In this case, step S102 of determining whether the terminal is located in the secure region of the wireless access device may include steps described below.

It is determined whether the terminal is located in the horizontal secure region according to the position information of the terminal.

It is determined that the terminal is not located in the secure region in a case where the terminal is not located in the horizontal secure region. It is determined whether the terminal is located in the vertical secure region in a case where the terminal is located in the horizontal secure region. It is determined that the terminal is located in the secure region in a case where the terminal is located in the vertical secure region, or it is determined that the terminal is not located in the secure region in a case where the terminal is not located in the vertical secure region.

In this implementation, for the terminal, in a case where it is determined that the terminal is located in the horizontal secure region and the vertical secure region according to the position information of the terminal in the three-dimensional coordinate system, it is determined that the terminal is located in the secure region of the wireless access device; and in a case where it is determined that the terminal is not located in the horizontal secure region or the vertical secure region according to the position information of the terminal in the three-dimensional coordinate system, it is determined that the terminal is not located in the secure region of the wireless access device.

In an exemplary implementation, step S103 may include steps described below.

When the wireless access device detects that any one terminal is successfully connected to the wireless access device, a traffic bandwidth meeting a first condition is allocated to the terminal in a case where it is determined that the terminal is located in the secure region of the wireless access device, where the traffic bandwidth meeting the first condition may be referred to as a first traffic bandwidth.

A traffic bandwidth meeting a second condition is allocated to the terminal or the traffic bandwidth is stopped to be allocated to the terminal in a case where it is determined that the terminal is not located in the secure region of the wireless access device, where the traffic bandwidth meeting the second condition may be referred to as a second traffic bandwidth.

The traffic bandwidth meeting the first condition is greater than the traffic bandwidth meeting the second condition.

In this implementation, when the terminal is located in the secure region of the wireless access device, after the terminal is successfully connected to the wireless access device, a sufficient Internet traffic bandwidth may be allocated to the terminal; when the terminal is not located in the secure region of the wireless access device, after the terminal is connected to the wireless access device, the Internet traffic bandwidth allocated to the terminal may be limited or stopped, but a connection to the terminal is not actively ended.

In an exemplary implementation, step S103 may include steps described below.

When the wireless access device detects that a number of continual connection failures of any one terminal to the wireless access device within a predetermined time period meets a threshold condition, in the case where it is determined that the terminal is located in the secure region of the wireless access device, a continual connection behavior of the terminal is stopped temporarily, and a prompt for confirming whether the terminal is abnormal is given.

In the case where it is determined that the terminal is not located in the secure region of the wireless access device, a connection behavior of the terminal is stopped and a request of the terminal is not responded to.

The threshold condition may include that the number of continual connection failures to the wireless access device within the predetermined time period is greater than or equal to a secure threshold.

In this implementation, when the number of continual connection failures of the terminal within the predetermined time period meets the threshold condition (that is, it is considered that a hacker is likely to perform an attack), an administrator is notified to confirm whether the terminal is abnormal if the terminal is located in the secure region of the wireless access device, and the terminal is blacklisted if the terminal is not located in the secure region.

In an exemplary implementation, step S103 may include steps described below.

After position information of a terminal connected to the wireless access device is periodically acquired, a traffic bandwidth meeting a third condition is allocated to the terminal in the case where it is determined that the terminal is located in the secure region of the wireless access device, where the traffic bandwidth meeting the third condition may be referred to as a third traffic bandwidth.

A traffic bandwidth meeting a fourth condition is allocated to the terminal in the case where it is determined that the terminal is not located in the secure region of the wireless access device, where the traffic bandwidth meeting the fourth condition may be referred to as a fourth traffic bandwidth.

The traffic bandwidth meeting the third condition is greater than the traffic bandwidth meeting the fourth condition.

In this implementation, when the terminal is located in the secure region of the wireless access device, the sufficient Internet traffic bandwidth may be allocated to the terminal; and when the terminal is not located in the secure region of the wireless access device, the Internet traffic bandwidth allocated to the terminal may be limited or stopped, but a connection to the terminal is not actively ended. The traffic bandwidth meeting the third condition may be the same as or different from the traffic bandwidth meeting the first condition, and the traffic bandwidth meeting the fourth condition may be the same as or different from the traffic bandwidth meeting the second condition. However, it is not limited in the present application.

In an embodiment, in the exemplary implementations described above, the performed access control operation is not limited in the present application, and the access control operation to be performed may be adaptively adjusted according to practical application scenarios, so as to improve access security of the wireless access device.

In an exemplary implementation, a number of anchor apparatuses may be at least two.

The step in which the wireless access device acquires the position information of the terminal in the three-dimensional coordinate system established by the wireless access device and the anchor apparatus includes a step described below. The wireless access device acquires position information of the terminal in a three-dimensional coordinate system established by the wireless access device and at least two anchor apparatuses, where the three-dimensional coordinate system established by the wireless access device and the at least two anchor apparatuses may be a space rectangular coordinate system.

In this implementation, step S101 may include steps described below.

The wireless access device detects a distance between the wireless access device and the terminal and a distance between the wireless access device and each anchor apparatus among the at least two anchor apparatuses, and receives a distance between each anchor apparatus and the terminal from each anchor apparatus.

Alternatively, the wireless access device detects the distance between the wireless access device and the terminal, and receives the distance between each anchor apparatus and the wireless access device and the distance between each anchor apparatus and the terminal from each anchor apparatus.

Alternatively, the wireless access device receives the position information of the terminal from each anchor apparatus among the at least two anchor apparatuses.

The wireless access device may calculate a three-dimensional coordinate of the terminal in the rectangular coordinate system according to the distance between the wireless access device and each anchor apparatus, the distance between each anchor apparatus and the terminal, and the distance between the wireless access device and the terminal.

Alternatively, the three-dimensional coordinate of the terminal in the rectangular coordinate system may be calculated by one anchor apparatus among the at least two anchor apparatuses, and the one anchor apparatus transmits the three-dimensional coordinate of the terminal to the wireless access device after the three-dimensional coordinate is calculated.

In an exemplary implementation, the step in which the wireless access device detects the distance between the wireless access device and the terminal and the distance between the wireless access device and each anchor apparatus may include a step described below.

The wireless access device detects the distance between the wireless access device and the terminal and the distance between the wireless access device and each anchor apparatus through the fine timing measurement (FTM). In this way, precision of the position information is improved.

The present application will be described in detail below through multiple embodiments.

Embodiment 1

This embodiment describes a manner that a wireless access device (for example, a wireless router) cooperates with an anchor apparatus (for example, a WiFi signal transceiver device) to position a terminal (for example, a WiFi terminal).

In this embodiment, a number of anchor apparatuses may be three, and a positional relationship between three anchor apparatuses (e.g., an anchor apparatus A, an anchor apparatus B, and an anchor apparatus C) and the wireless router may be as shown in FIG. 2. The three anchor apparatuses and the wireless router may establish a space rectangular coordinate system.

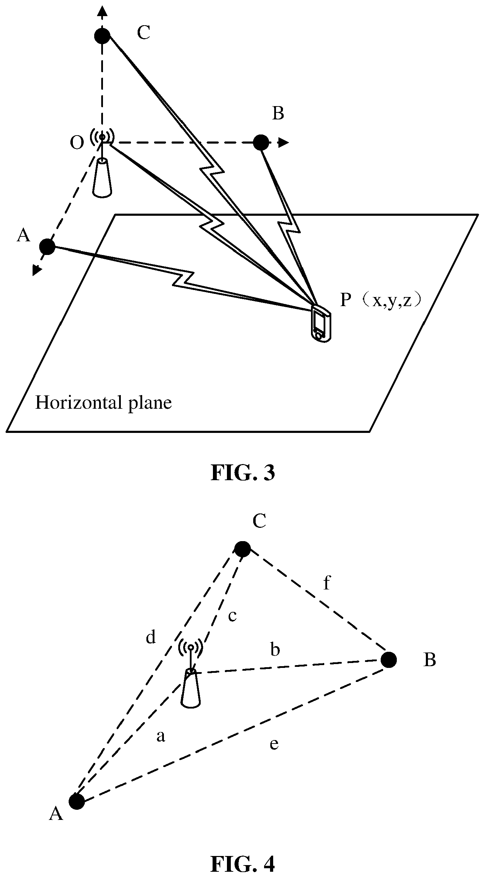

As shown in FIG. 2, the anchor apparatus A, the anchor apparatus B, and the wireless router are located on a same horizontal plane, and an angle between a straight line where the anchor apparatus A and the wireless router are located and a straight line where the anchor apparatus B and the wireless router are located is 90 degrees (i.e., mutually perpendicular), and a straight line where the anchor apparatus C and the wireless router are located is perpendicular to the horizontal plane. The rectangular coordinate system is established with an antenna position (e.g., a WiFi antenna position) of the wireless router as an origin, and the three anchor apparatuses A, B and C are respectively disposed on a horizontal X-axis, a horizontal Y-axis, and a vertical Z-axis. As shown in FIG. 3, the antenna position of the wireless router is denoted as an origin O, and positions of the three anchor apparatuses may be sequentially denoted as A (a, 0, 0), B (0, b, 0), and C (0, 0, c). A position of the terminal to be connected to the wireless router may be denoted as P (x, y, z), where the position P (x, y, z) of the terminal is unknown.

Distances from the three anchor apparatuses A, B and C to the wireless router may be preset, for example, it may be preset that a distance from the anchor apparatus A to the wireless router is a, a distance from the anchor apparatus B to the wireless router is b, and a distance from the anchor apparatus C to the wireless router is c. However, it is not limited in the present application. In another implementation, the wireless router may obtain a distance between the wireless router and each anchor apparatus by a related measurement manner.

In this embodiment, the anchor apparatuses A, B and C may transmit and receive a WiFi signal, and the wireless router may detect a distance between the wireless router and the terminal and the distance between the wireless router and each anchor apparatus through fine timing measurement (FTM). Each anchor apparatus may detect its respective distance to the terminal through the FTM and transmit the detected respective distance to the terminal to the wireless router through the WiFi signal. The wireless router may calculate a three-dimensional coordinate of the terminal in the rectangular coordinate system according to the detected distance between the wireless router and the terminal, the detected distance between the wireless router and each anchor apparatus, and the received distance between each anchor apparatus and the terminal.

The FTM is proposed in a draft of the IEEE 802.11REVmc standard, and has precision of a picosecond level in theory. In this embodiment, with an FTM ranging method, the wireless router and the anchor apparatus may detect distances, so that the wireless router may calculate a precise position of the terminal. A detailed ranging principle of the FTM is not repeated in this embodiment.

A process of calculating the position P of the terminal is described below with reference to FIG. 3. For example, distances from the position P of the terminal to the antenna position O of the wireless router and positions of the anchor apparatuses A, B and C are respectively denoted as $l_{\overline{OP}}$, $l_{\overline{AP}}$, $l_{\overline{BP}}$ and $L_{\overline{CP}}$. Then, the following equations may be derived:

$$\begin{cases} \sqrt{x^2 + y^2 + z^2} = l_{\overline{OP}} \\ \sqrt{(x-a)^2 + y^2 + z^2} = l_{\overline{AP}} \\ \sqrt{x^2 + (y-b)^2 + z^2} = l_{\overline{BP}} \\ \sqrt{x^2 + y^2 + (z-c)^2} = l_{\overline{CP}} \end{cases}$$

A final coordinate position of the position P of the terminal is:

$$\begin{cases} x = \dfrac{(l_{\overline{OP}}^2 - l_{\overline{AP}}^2 + a^2)}{2a} \\ y = \dfrac{(l_{\overline{OP}}^2 - l_{\overline{BP}}^2 + b^2)}{2b} \\ z = \dfrac{(l_{\overline{OP}}^2 - l_{\overline{CP}}^2 + c^2)}{2c} \end{cases}$$

In an embodiment, precision of the position P of the terminal in this embodiment is related to precision of the distances from the anchor apparatus A, B and C to the antenna position O of the wireless router; the more precise the distances are, the more precise the calculated final coordinate position of the terminal.

In another implementation of an embodiment, each anchor apparatus may be further configured to transmit and receive a positioning signal such as laser and infrared. After each anchor apparatus detects its respective distance to the terminal through the positioning signal, each anchor apparatus transmits the detected distance to the wireless router through a data transmission signal (for example, the WiFi signal), so that the wireless router calculates the three-dimensional coordinate of the terminal.

In another implementation, data transmission may also be performed between the three anchor apparatus, and any one anchor apparatus among the three anchor apparatus may calculate the three-dimensional coordinate of the terminal and transmits the calculated three-dimensional coordinate to the wireless router.

In another implementation, positions of the three anchor apparatus may not necessarily be set particularly according to the positions in the rectangular coordinate system. For example, positions of the wireless router and the three anchor apparatus may be as shown in FIG. 4, and a suitable space rectangular coordinate system may be derived from a structure of a three-dimensional cone.

In another implementation, the distances between the wireless router and the three anchor apparatuses may not necessarily be designed in advance. In this implementation, the position of each anchor apparatus may be initialized as follows: distances between the wireless router, the anchor apparatus A, the anchor apparatus B and the anchor apparatus C are measured by the FTM, As shown in FIG. 4, the distance a between the anchor apparatus A and the wireless router, a distance c between the anchor apparatus C and the wireless router, a distance b between the anchor apparatus B and the wireless router, a distance d between the anchor apparatus A and the anchor apparatus C, the distance e between the anchor apparatus A and the anchor apparatus B, and a distance f between the anchor apparatus C and the anchor apparatus B are measured separately, and the suitable space rectangular coordinate system may be derived from the structure of the three-dimensional cone.

In another implementation, if the three anchor apparatuses are not placed at ideal positions (e.g., the three anchor apparatuses are nearly located on a same plane as the wireless router), the wireless router may detect a non-ideal state during initialization and may notify a user through a user interface (UI) to place the three anchor apparatuses again.

In an embodiment, the positions of the wireless router and an auxiliary anchor apparatus may not be changed randomly after their positions are determined, to avoid the problem that the wireless router imprecisely determines the secure region. In addition, when the number of anchor apparatuses is at least three, the wireless router and the at least three anchor apparatuses are avoided being placed on a same plane, that is, the wireless router and the anchor apparatus are not placed on the same plane, to avoid the problem that the terminal is imprecisely positioned.

Embodiment 2

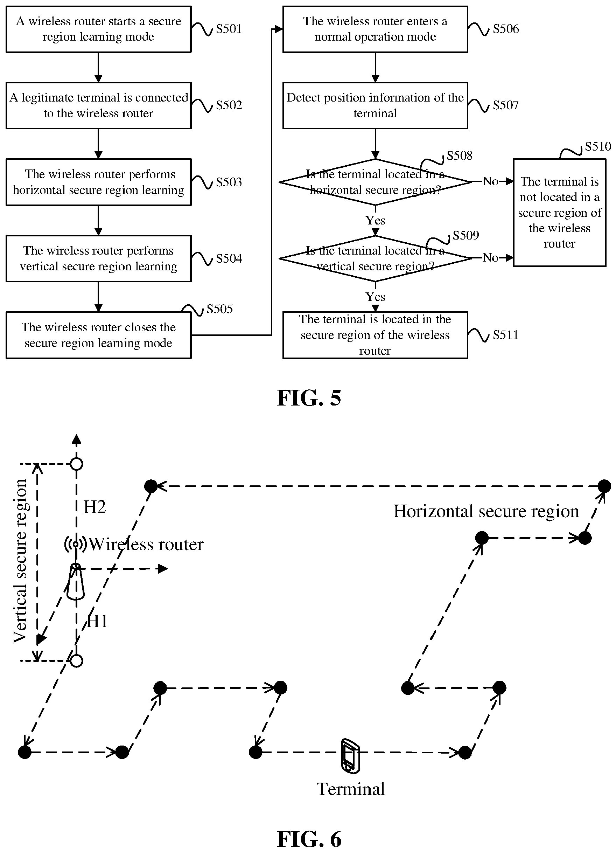

This embodiment describes a process of establishing and detecting a secure region of a wireless access device (for example, a wireless router), as shown in FIG. 5.

In this embodiment, the secure region is a three-dimensional space including a horizontal secure region and a vertical secure region, that is, the three-dimensional space may be obtained by combining the horizontal secure region and the vertical secure region.

The process in the embodiment includes steps described below.

In S501, the wireless router enters a secure region learning mode when being used for the first time, where secure region learning is divided into two parts: the horizontal secure region and the vertical secure region.

In S502, a legitimate terminal is connected to the wireless router, for example, a legitimate WiFi terminal is connected to a WiFi wireless router.

In S503, the wireless router performs horizontal secure region learning.

To establish the horizontal secure region, after the legitimate terminal is connected to the wireless router, the wireless router positions the legitimate terminal at a period of a short time interval (which is set to, for example, 10s) (for example, a three-dimensional coordinate of the legitimate terminal is determined by the manner described in the embodiment 1). Meanwhile, the legitimate terminal tries to move one or more circles along a boundary of an indoor region. Assuming that a positioning period of the wireless router is 10s, a moving speed of the legitimate terminal may be kept around 0.1m/s in practical operations. The wireless router performs optimization on collected position information (for example, a user later participates in fine-tuning a shape of the horizontal region) to obtain a polygonal horizontal secure region composed of multiple points, as shown in FIG. 6.

In S504, the wireless router performs vertical secure region learning.

For establishing the vertical secure region, referring to FIG. 6, after the legitimate terminal is connected to the wireless router, the legitimate terminal moves in a vertical direction; when moving to a roof, the legitimate terminal stays for a period of time to enable the wireless router to collect a height H2 of the highest point in the vertical direction; in addition, after moving to a floor, the legitimate terminal stays for a period of time to enable the wireless router to collect a height H1 of the lowest point in the vertical direction; therefore, an indoor vertical secure region is established.

In S505, the wireless router closes the secure region learning mode.

In S506, the wireless router enters a normal operation mode.

In this embodiment, after a polygonal secure region in a horizontal direction and a secure region in the vertical direction are successfully established, the wireless router closes the secure region learning mode and enters the normal operation mode.

In S507, the wireless router detects position information of a terminal.

In S508, it is determined whether the terminal is located in the horizontal secure region. In a case where the terminal is located in the horizontal secure region, S509 is performed, In a case where the terminal is not located in the horizontal secure region, S510 is performed.

In S509, it is determined whether the terminal is located in the vertical secure region. In a case where the terminal is located in the vertical secure region, S511 is performed. In a case where the terminal is not located in the vertical secure region, S510 is performed.

In S510, it is determined that the terminal is not located in the secure region of the wireless router.

In S511, it is determined that the terminal is located in the secure region of the wireless router.

In this embodiment, when the wireless router detects whether the terminal is located in the secure region, the wireless router performs positioning and detection on the terminal by a terminal positioning manner described in the embodiment 1. Assuming that a coordinate position of the terminal is detected to be (x, y, z), it is determined whether a point (x, y) is located in the polygonal horizontal secure region, and if not, the terminal is not located in the secure region of the wireless router. If (x, y) is located in the polygonal horizontal region, it is further to be detected whether a vertical coordinate z of the terminal meets $H1 \leq z \leq H2$, that is, whether the terminal is located in the vertical secure region. If the terminal is located in the vertical secure region, the terminal is located in the secure region of the wireless router.

In an embodiment, a sequence of the horizontal secure region learning and the vertical secure region learning is not limited in the present application, and the horizontal secure region learning and the vertical secure region learning may be simultaneously performed; and a sequence for detecting the horizontal secure region and the vertical secure region is not limited either in the present application.

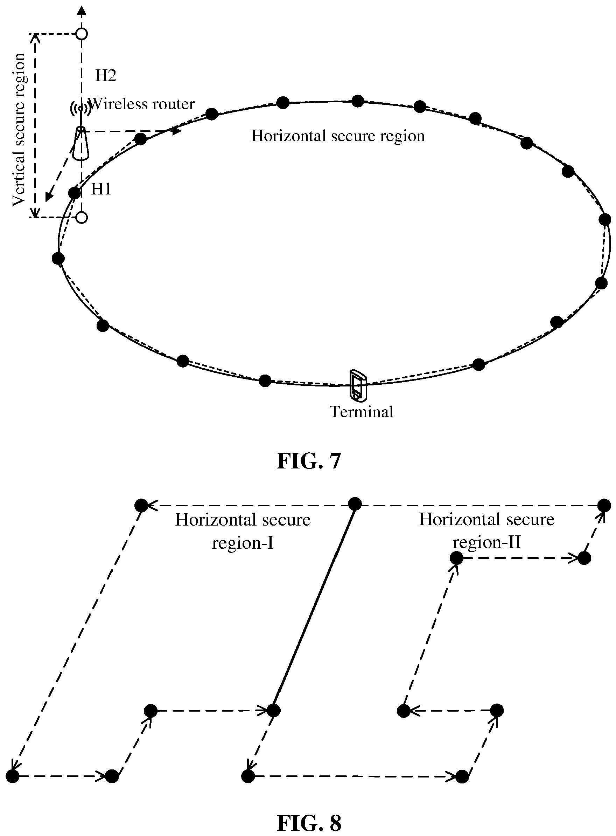

In an embodiment, a shape of the horizontal secure region is not limited in the present application. As shown in FIG. 6, the horizontal secure region may be polygonal. As shown in FIG. 7, the horizontal secure region may be circular, for example, elliptical. In a process of establishing the horizontal secure region as shown in FIG. 7, the legitimate terminal may move around a circular horizontal region, and the wireless router periodically performs positioning and calculation on positions of the legitimate terminal on a region boundary; after the legitimate terminal moves one circle along the circular region, a polygon connected by multiple boundary points is obtained through positioning to replace a boundary of the circular region. In order to describe the circular region more precisely, a polygon connected by more boundary points is needed to achieve the effect of the circular region as much as possible. Therefore, in this implementation, the positioning period of the wireless router may be reduced, for example, the positioning and calculation is performed on the legitimate terminal every 5s; in addition, the moving speed of the legitimate terminal may be reduced, for example, the legitimate terminal moves around the circular region at a speed of 0.5 m/s. Therefore, more boundary points may be obtained after the legitimate terminal moves one circle.

In another implementation, as shown in FIG. 8, the horizontal secure region is divided by a barrier wall into two spaces: a horizontal secure region-I and a horizontal secure region-II. Due to serious signal quality attenuation of the Wi-Fi signal penetrating through the wall, the FTM ranging will thus have a large error. Therefore, in this implementation, a set of wireless router and anchor apparatus for auxiliary positioning described in the embodiment 1 of the present application may be separately placed in the two spaces determined by the horizontal secure region-I and the horizontal secure region-II, two wireless routers may respectively calculate and learn their own secure regions in their respective spaces, and finally the two wireless routers may share information on the other's secure region. In an example in which a wireless router-I learns the horizontal secure region-I and a wireless router-II learns the horizontal secure region-II, the wireless router-I and the wireless router-II may determine that their own secure regions each include the horizontal secure region-I and the horizontal secure region-II.

In this embodiment, the wireless router determines its own secure region by a learning manner, thereby improving precision and applicability of the secure region.

## Embodiment 3

This embodiment describes a manner in which a wireless router actively defends against hacker attacks and prevents Internet traffic leakage. In this embodiment, when using the wireless router, a user must fix positions of the wireless router and an anchor apparatus (such as the positions shown in the embodiment 1), and the wireless router starts up; the subsequent steps are described below.

In a first step, when using the wireless router for the first time, the user sets the wireless router in a secure region learning mode.

In a second step, the user connects a legitimate terminal (for example, a Wi-Fi terminal) to the wireless router, and moves circles along an indoor boundary as much as possible with the legitimate terminal, so that the wireless router learns and masters region conditions in an indoor space as completely as possible.

In a third step, the user confirms a learning condition of the wireless router on regions in the indoor space through an interaction via a user interface (UI); if necessary, the user may appropriately adjust a range of the secure region through the UI.

In a fourth step, after indoor secure region learning is finished, the secure region learning mode of the wireless router is closed, and the wireless router enters an active defense mode (normal operation mode).

After the fourth step, the wireless router has established its own secure region.

In a fifth step, if it is detected that a WiFi terminal is successfully connected to the wireless router, positioning and detection of the WiFi terminal is triggered once; in a case where the WiFi terminal is located in the secure region of the wireless router, the WiFi terminal normally surfs the Internet, that is, the wireless router allocates a sufficient Internet traffic bandwidth (assuming that the wireless router may allocate a maximum bandwidth of 10 Mbps to each user) to the WiFi terminal; in a case where the WiFi terminal is not located in the secure region of the wireless router, the wireless router reduces or stops the Internet traffic bandwidth allocated to the WiFi terminal, but does not actively ends a connection to the WiFi terminal.

In a sixth step, if it is detected that a WiFi terminal device has always failed to be connected for a short time (for example, 1 minute) and the number of connection failures exceeds a secure threshold, the wireless router will also be triggered to perform the positioning and detection of the WiFi terminal once; in the case where the WiFi terminal is located in the secure region of the wireless router, the wireless router actively notifies an administrator by another manner to confirm whether the WiFi terminal is abnormal and temporarily stops connections of the WiFi terminal; and in a case where the WiFi terminal is not located in the secure region of the wireless router, the WiFi terminal is blacklisted and stopped from the connections, that is, any message from the Wi-Fi terminal is completely discarded and any response is not given.

In a seventh step, the positioning and detection is periodically performed on each WiFi terminal connected to the wireless router; in the case where the WiFi terminal is located in the secure region of the wireless router, the WiFi terminal normally surfs the Internet without any limitation; and in the case where the WiFi terminal is not located in the secure region of the wireless router, the wireless router reduces or stops the Internet traffic bandwidth allocated to the WiFi terminal.

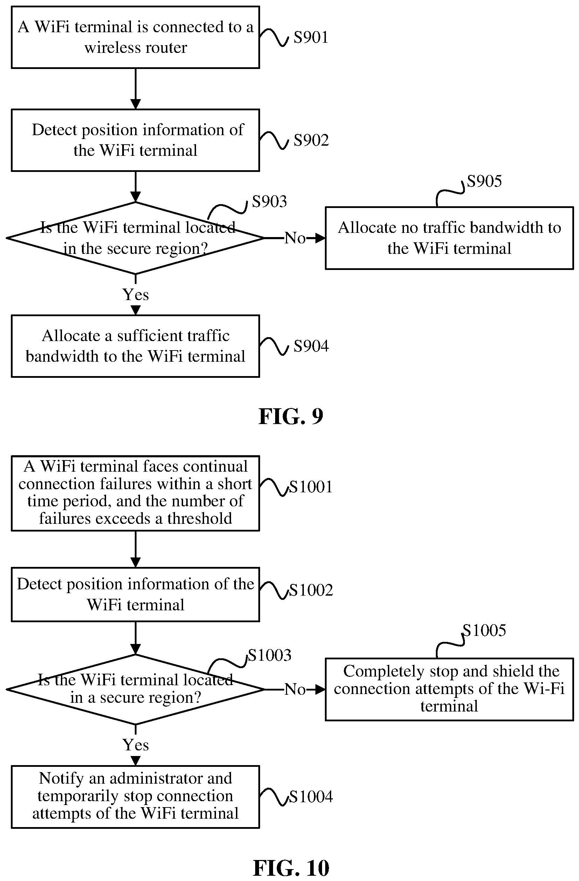

The fifth step to the seventh step are described in detail below with reference to FIG. 9 to FIG. 11, respectively.

As shown in FIG. 9, this embodiment can actively defend against traffic leakage, and this embodiment includes steps described below.

In S901, the wireless router is connected to the WiFi terminal.

In S902, after the WiFi terminal is successfully connected to the wireless router, the wireless router performs a positioning operation on the WiFi terminal (refer to the manner described in the embodiment 1).

In S903, the wireless router determines whether the WiFi terminal is located in the secure region of the wireless router. In the case where the WiFi terminal is located in the secure region, S904 is performed. In the case where the WiFi terminal is not located in the secure region, S905 is performed.

In S904, a sufficient traffic bandwidth is allocated to the WiFi terminal (assuming that the wireless router may allocate the maximum bandwidth of 10Mbps to each user.

In S905, no traffic bandwidth is allocated to the WiFi terminal.

As shown in FIG. 10, this embodiment can actively defend against brute force attacks of hackers on a WiFi password of an indoor wireless router. This embodiment includes steps described below.

In S1001, the wireless router detects an event of continual connection failures of the WiFi terminal within a short time period, and the number of connection attempts of the WiFi terminal within a predetermined time period exceeds a predetermined threshold. In this case, the wireless router will be triggered to perform one positioning operation on the WiFi terminal.

In S1002, the wireless router detects position information of the WiFi terminal (refer to embodiment 1).

In S1003, the wireless router determines whether the WiFi terminal is located in the secure region of the wireless router, In the case where the WiFi terminal is located in the secure region, S1004 is performed. In the case where the WiFi terminal is not located in the secure region, S1005 is performed.

In S1004, the administrator is notified to check whether something is wrong with the WiFi terminal and a continual connection behavior of the WiFi terminal is temporarily stopped.

In S1005, the connection behavior of the WiFi terminal is directly stopped and any request of the WiFi terminal is no longer responded to.

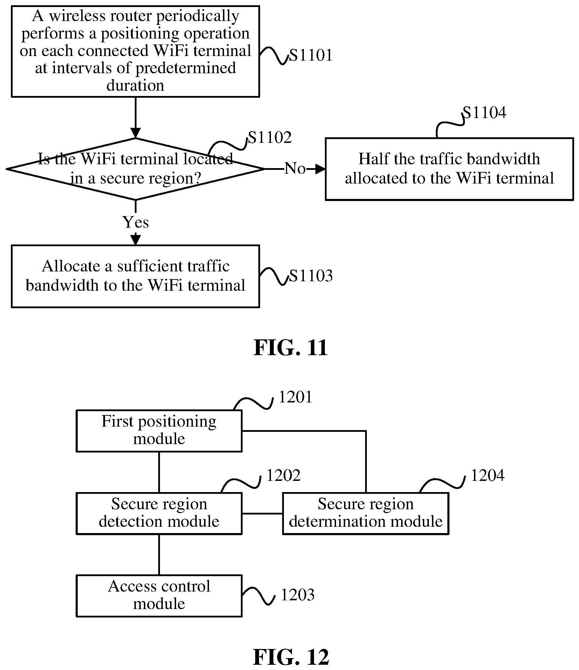

As shown in FIG. 11, this embodiment can actively defend against traffic leakage, and this embodiment includes steps described below.

In S1101, the wireless router periodically performs the positioning operation on each connected WiFi terminal at intervals of predetermined duration (refer to embodiment 1).

In S1102, the wireless router determines whether the WiFi terminal device is located in the secure region of the wireless router. In the case where the WiFi terminal is located in the secure region, S1103 is performed. In the case where the WiFi terminal is not located in the secure region, S1104 is performed.

In S1103, the sufficient traffic bandwidth is allocated to the WiFi terminal.

In S1104, the traffic bandwidth allocated to the WiFi terminal is halved (for example, an allocable minimum bandwidth is 1 Kbps).

In an embodiment, assuming that the traffic bandwidth allocated to the WiFi terminal is 2 Mbps, if it is detected that the WiFi terminal is not located in the secure region within a first period, the traffic bandwidth allocated to the WiFi terminal becomes 1 Mbps, and the traffic bandwidth will be reduced to 512 Kbps within a second period.

As shown in FIG. 12, an embodiment of the present application further provides an access control apparatus, which is disposed in a wireless access device. The apparatus includes a first positioning module 1201, a secure region detection module 1202 and an access control module 1203.

The first positioning module 1201 is configured to acquire position information of a terminal in a three-dimensional coordinate system established by the wireless access device and an anchor apparatus.

The secure region detection module 1202 is configured to determine, according to the position information of the terminal in the three-dimensional coordinate system, whether the terminal is located in a secure region of the wireless access device.

The access control module 1203 is configured to perform, according to a determination result, an access control operation corresponding to the determination result.

The apparatus may further include a secure region determination module 1204, which is configured to establish or adjust the secure region of the wireless access device by at least one of manners described below.

The secure region of the wireless access device is established or adjusted according to information inputted through a UI.

The secure region of the wireless access device is established or adjusted according to preset information.

The secure region of the wireless access device is established or adjusted by acquiring position information of one or more predetermined terminals in the three-dimensional coordinate system after the one or more predetermined terminals are connected to the wireless access device.

In an exemplary implementation, the secure region may be a three-dimensional space including a horizontal secure region and a vertical secure region. The secure region detection module 1202 may be configured to determine whether the terminal is located in the secure region of the wireless access device by manners described below.

It is determined, according to the position information of the terminal in the three-dimensional coordinate system, whether the terminal is located in the horizontal secure region.

It is determined that the terminal is not located in the secure region in a case where the terminal is not located in the horizontal secure region. It is determined whether the terminal is located in the vertical secure region in a case where the terminal is located in the horizontal secure region. It is determined that the terminal is located in the secure region in a case where the terminal is located in the vertical secure region, or it is determined that the terminal is not located in the secure region in a case where the terminal is not located in the vertical secure region.

In an exemplary implementation, the access control module 1203 may include at least one of: a first processing unit, a second processing unit or a third processing unit.

The first processing unit is configured to: when it is detected that a terminal is successfully connected to the wireless access device, allocate a traffic bandwidth meeting a first condition to the terminal in a case where it is determined that the terminal is located in the secure region of the wireless access device, or allocate a traffic bandwidth meeting a second condition to the terminal or stop allocating the traffic bandwidth to the terminal in a case where it is determined that the terminal is not located in the secure region of the wireless access device; where the traffic bandwidth meeting the first condition is greater than the traffic bandwidth meeting the second condition.

The second processing unit is configured to: when it is detected that a number of continual connection failures of a terminal for the wireless access device within a predetermined time period meets a threshold condition, temporarily stop a continual connection behavior of the terminal in the case where it is determined that the terminal is located in the secure region of the wireless access device, and give a prompt for confirming whether the terminal is abnormal, or stop a connection behavior of the terminal and not respond to a request of the terminal in the case where it is determined that the terminal is not located in the secure region of the wireless access device.

The third processing unit is configured to: after the wireless access device periodically acquires position information of a terminal connected to the wireless access device, allocate a traffic bandwidth meeting a third condition to the terminal in the case where it is determined that the terminal is located in the secure region of the wireless access device, or allocate a traffic bandwidth meeting a fourth condition to the terminal in the case where that the terminal is not located in the secure region of the wireless access device; and the traffic bandwidth meeting the third condition is greater than the traffic bandwidth meeting the fourth condition.

In an exemplary implementation, a number of anchor apparatuses may be at least two, and the wireless access device and at least two anchor apparatuses may establish a space rectangular coordinate system.

The first positioning module 1201 may be configured to acquire the position information of the terminal in the three-dimensional coordinate system established by the wireless access device and the anchor apparatus by manners described below.

The first positioning module 1201 detects a distance between the wireless access device and the terminal and a distance between the wireless access device and each anchor apparatus among the at least two anchor apparatuses, receives a distance between each anchor apparatus and the terminal from each anchor apparatus, and calculates the position information of the terminal in the three-dimensional coordinate system according to the distance between the wireless access device and the terminal, the distance between the wireless access device and each anchor apparatus and the distance between each anchor apparatus and the terminal.

Alternatively, the first positioning module 1201 detects the distance between the wireless access device and the terminal, receives the distance between each anchor apparatus and the wireless access device and the distance between each anchor apparatus and the terminal from each anchor apparatus, and calculates the position information of the terminal in the three-dimensional coordinate system according to the distance between the wireless access device and the terminal, the distance between each anchor apparatus and the wireless access device and the distance between each anchor apparatus and the terminal.

Alternatively, the wireless access device receives the position information of the terminal from one of the at least two anchor apparatuses.

In an exemplary implementation, the first positioning module 1201 may detect the distance between the wireless access device and the terminal and the distance between the wireless access device and any one of the at least two anchor apparatuses through FTM.

In an exemplary implementation, the first positioning module 1201, that is, a positioning module disposed in the access control apparatus, may be configured to precisely position the terminal for a wireless router, where the position information of the terminal is used by the secure region detection module 1202, the secure region determination module 1204 and the access control module 1203, After a legitimate terminal is connected to the wireless router, the first positioning module 1201 continually detects position information of the legitimate terminal, so that the secure region determination module 1204 learns to establish a secure region of the wireless router. Based on the position information of the terminal detected by the first positioning module 1201, the secure region detection module 1202 determines whether the terminal is in the secure region according to the learned secure region. The access control module 1203 actively defends against malicious WiFi attacks of hackers and prevents Internet traffic leakage and the like.

The related description of the wireless access device provided by this embodiment may refer to the description of the method embodiments described above, and thus is not repeated in detail herein.

Additionally, an embodiment of the present application further provides an access control system. The system includes the wireless access device and the anchor apparatus described in the above-mentioned embodiments, where the wireless access device is configured with an access control apparatus. A positional relationship between the wireless access device and the anchor apparatus may refer to the description of the embodiment 1, and thus is not repeated in detail herein.

Additionally, an embodiment of the present application further provides a wireless access device. The wireless access device includes a memory, a processor and an access control program stored on the memory and executable by the processor. When executed by the processor, the access control program implements the access control method described above.

Additionally, an embodiment of the present application further provides a machine-readable medium, which is configured to store an access control program. When executed by a processor, the access control program implements the access control method described above.

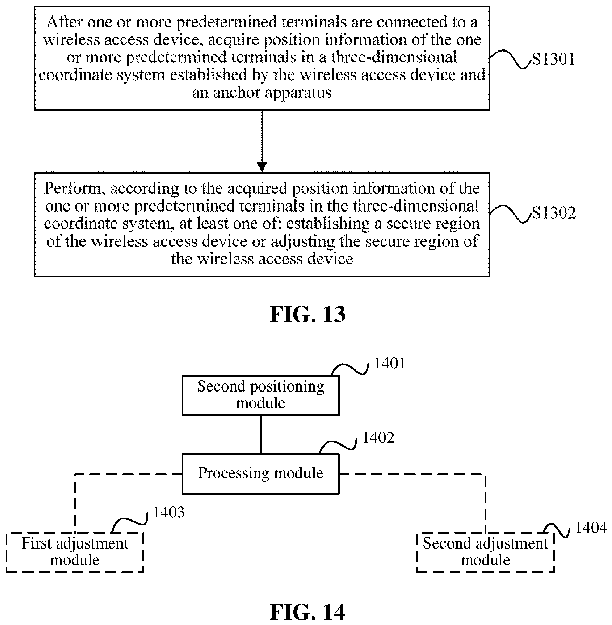

As shown in FIG. 13, an embodiment of the present application further provides a method for determining a secure region. The method includes steps described below.

In S1301, after one or more predetermined terminals are connected to a wireless access device, position information of the one or more predetermined terminals in a three-dimensional coordinate system established by the wireless access device and an anchor apparatus is acquired.

In S1302, according to the acquired position information of the one or more predetermined terminals in the three-dimensional coordinate system, at least one of the following steps is performed: a secure region of the wireless access device is established or the secure region of the wireless access device is adjusted.

In an exemplary implementation, after the secure region of the wireless access device is established, the method in this embodiment may further include at least one of steps described below.

The secure region of the wireless access device is adjusted according to information inputted through a UI.

The secure region of the wireless access device is adjusted according to preset information.

For example, after the secure region is established, a user may adjust the established secure region through the UI to make the secure region more reasonable; or after the secure region is established, the established secure region may be adjusted according to the preset information. For example, the preset information may include that a vertical distance between a highest point and a lowest point of a vertical secure region is greater than or equal to a preset value, whether a maximum vertical distance in the established vertical secure region meets the preset value defined by the preset information may be detected, and if not, the established vertical secure region may be adjusted according to the preset value.

In an exemplary implementation, a three-dimensional space determined according to the acquired position information may be used as the secure region of the wireless access device. In other words, the secure region of the wireless access device is the three-dimensional space.

In an exemplary implementation, a number of anchor apparatuses may be at least two, and the wireless access device and at least two anchor apparatuses may establish a rectangular coordinate system.

In an exemplary implementation, when the method for determining a secure region in this embodiment is applied to the wireless access device, step S1301 may include steps described below.

The wireless access device detects a distance between the wireless access device and each of the one or more predetermined terminals and a distance between the wireless access device and each anchor apparatus, receives a distance between the anchor apparatus and each predetermined terminal from the anchor apparatus, and calculates the position information of the one or more predetermined terminals in the three-dimensional coordinate system according to the distance between the wireless access device and each of the one or more predetermined terminals, the distance between the wireless access device and each anchor apparatus and the distance between the anchor apparatus and the each of the one or more predetermined terminals.

Alternatively, the wireless access device detects the distance between the wireless access device and each of the one or more predetermined terminals, receives the distance between the anchor apparatus and the wireless access device and the distance between the anchor apparatus and each of the one or more predetermined terminals from the anchor apparatus, and calculates the position information of the one or more predetermined terminals in the three-dimensional coordinate system according to the distance between the wireless access device and each of the one or more predetermined terminals, the distance between the anchor apparatus and the wireless access device and the distance between the anchor apparatus and each of the one or more predetermined terminals.

In an exemplary implementation, when the method for determining a secure region in this embodiment is applied to the anchor apparatus, step S1301 may include steps described below.

The anchor apparatus detects the distance between the anchor apparatus and each of the one or more predetermined terminals and the distance between the anchor apparatus and the wireless access device, receives the distance between the wireless access device and each of the one or more predetermined terminals from the wireless access device, and calculates the position information of the one or more predetermined terminals in the three-dimensional coordinate system according to the distance between the anchor apparatus and each of the one or more predetermined terminals, the distance between the anchor apparatus and the wireless access device and the distance between the wireless access apparatus and each of the one or more predetermined terminals.

Alternatively, the anchor apparatus detects the distance between the anchor apparatus and each of the one or more predetermined terminals, receives the distance between the wireless access device and the anchor apparatus and the distance between the wireless access device and each of the one or more predetermined terminals from the wireless access device, and calculates the position information of the one or more predetermined terminals in the three-dimensional coordinate system according to the distance between the anchor apparatus and each of the one or more predetermined terminals, the distance between the wireless access device and the anchor apparatus and the distance between the wireless access device and each of the one or more predetermined terminals.

In an exemplary implementation, the distance between the wireless access device and each anchor apparatus, the distances between each anchor apparatus and the one or more predetermined terminals, and the distances between the wireless access device and the one or more predetermined terminals may be obtained through the FTM.

The related description of this embodiment may refer to the descriptions of the embodiment 1 and the embodiment 2, and thus is not repeated in detail herein.

As shown in FIG. 14, an embodiment of the present application provides an apparatus for determining a secure region. The apparatus includes a second positioning module 1401 (that is, a positioning module disposed in the apparatus for determining a secure region) and a processing module 1402.

The second positioning module 1401 is configured to: after one or more predetermined terminals are connected to a wireless access device, acquire position information of the one or more predetermined terminals in a three-dimensional coordinate system established by the wireless access device and an anchor apparatus.

The processing module 1402 is configured to perform, according to the acquired position information of the one or more predetermined terminals in the three-dimensional coordinate system, at least one of: establishing a secure region of the wireless access device or adjusting the secure region of the wireless access device.

In an exemplary implementation, the apparatus in this embodiment may further include at least one of: a first adjustment module 1403 or a second adjustment module 1404.

The first adjustment module 1403 is configured to adjust the secure region of the wireless access device according to information inputted through a UI.

The second adjustment module 1404 is configured to adjust the secure region of the wireless access device according to preset information.

The description of the apparatus for determining a secure region provided by this embodiment may refer to the description of the method for determining a secure region described above, and thus is not repeated in detail herein.

Additionally, an embodiment of the present application further provides a device. The device includes a memory, a processor and a program for determining a secure region stored on the memory and executable by the processor. When executed by the processor, the program for determining a secure region implements the method for determining a secure region described above. The device in this embodiment may be a wireless access device or an anchor apparatus.

Additionally, an embodiment of the present application further provides a machine-readable medium, which is configured to store a program for determining a secure region. When executed by a processor, the program for determining a secure region implements the method for determining a secure region described above. It should be understood by those skilled in the art that functional modules/units in all or part of the steps of the method, the system and the apparatus disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be implemented jointly by several physical components. Some or all components may be implemented as software executed by processors such as digital signal processors or microcontrollers, hardware, or integrated circuits such as application specific integrated circuits. Such software may be distributed on a machine-readable medium (such as a computer-readable medium). The computer-readable medium may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a random access medium (RAM), a read-only memory (ROM), an electrically erasable programmable read-only memory (EEPROM), a flash memory or other memory technologies, a compact disc read-only memory (CD-ROM), a digital versatile disc (DVD) or other optical disc storage, a magnetic cassette, a magnetic tape, a magnetic disk storage or other magnetic storage apparatuses, or any other medium used for storing desired information and accessed by a computer. In addition, as is known to those skilled in the art, the communication medium generally includes computer-readable instructions, data structures, program modules or other data in modulated data signals such as carriers or other transmission mechanisms, and may include any information delivery medium.

**INDUSTRIAL APPLICABILITY**

The present disclosure performs the access control based on precise positioning of the terminal and the secure region of the wireless access device, which can effectively ensure that the wireless access device is protected from malicious attacks or a password of the wireless access device is not cracked by a surrounding hacker, thereby improving the access security of the wireless access device. The wireless access device cooperates with the anchor apparatus to position the terminal, thereby improving the positioning precision. The wireless access device cooperates with the anchor apparatus to position the predetermined terminals to determine the secure region, improving the precision and applicability of the secure region.

**Claims**

1. An access control method, comprising:

   acquiring, by a wireless access device, position information of a terminal in a three-dimensional coordinate system established by the wireless access device and an anchor apparatus;
   determining, according to the position information of the terminal in the three-dimensional coordinate system, whether the terminal is located in a secure region of the wireless access device;
   performing, according to a determination result, an access control operation corresponding to the determination result.

2. The method of claim 1, further comprising: establishing or adjusting the secure region of the wireless access device by at least one of following manners:

establishing or adjusting, according to input information, the secure region of the wireless access device;
establishing or adjusting, according to preset information, the secure region of the wireless access device; or
establishing or adjusting the secure region of the wireless access device by acquiring position information of at least one predetermined terminal in the three-dimensional coordinate system after the at least one predetermined terminal is connected to the wireless access device, wherein each of the at least one predetermined terminal comprises a terminal identified as legitimate by the wireless access device.

3. The method of claim 1 or 2, wherein
the secure region is a three-dimensional space comprising a horizontal secure region and a vertical secure region; and
determining whether the terminal is located in the secure region of the wireless access device comprises:

determining, according to the position information of the terminal, whether the terminal is located in the horizontal secure region;
in response to determine that the terminal is not located in the horizontal secure region, determining that the terminal is not located in the secure region; and
in response to determine that the terminal is located in the horizontal secure region, determining whether the terminal is located in the vertical secure region, in response to determine that the terminal is located in the vertical secure region, determining that the terminal is located in the secure region, and in response to determining that the terminal is not located in the vertical secure region, determining that the terminal is not located in the secure region.

4. The method of claim 1, 2 or 3, wherein performing, according to the determination result, the access control operation corresponding to the determination result comprises:

in a case where the wireless access device detects that the terminal is successfully connected to the wireless access device, in response to determining that the terminal is located in the secure region of the wireless access device, allocating a traffic bandwidth meeting a first condition to the terminal; and in response to determining that the terminal is not located in the secure region of the wireless access device, allocating a traffic bandwidth meeting a second condition to the terminal, or stopping allocating the traffic bandwidth to the terminal;
wherein the traffic bandwidth meeting the first condition is greater than the traffic bandwidth meeting the second condition.

5. The method of claim 1, 2 or 3, wherein performing, according to the determination result, the access control operation corresponding to the determination result comprises:
in a case where the wireless access device detects that a number of continual connection failures of the terminal to the wireless access device within a predetermined time period meets a threshold condition, in response to determining that the terminal is located in the secure region of the wireless access device, stopping a continual connection behavior of the terminal within a preset time period and giving a prompt for confirming whether the terminal is abnormal; and in response to determining that the terminal is not located in the secure region of the wireless access device, stopping a connection behavior of the terminal and not responding to a request of the terminal.

6. The method of claim 1, 2 or 3, wherein performing, according to the determination result, the access control operation corresponding to the determination result comprises:
after the wireless access device periodically acquires position information of a terminal connected to the wireless access device, in response to determining that the terminal is located in the secure region of the wireless access device, allocating a traffic bandwidth meeting a third condition to the terminal; and in response to determining that the terminal is not located in the secure region of the wireless access device, allocating a traffic bandwidth meeting a fourth condition to the terminal;
wherein the traffic bandwidth meeting the third condition is greater than the traffic bandwidth meeting the fourth condition.

7. The method of claim 1, wherein at least two anchor apparatuses are provided; and
wherein acquiring, by the wireless access device, the position information of the terminal in the three-dimensional coordinate system established by the wireless access device and the anchor apparatus comprises:
acquiring, by the wireless access device, position information of the terminal in a three-dimensional coordinate system established by the wireless access device and the at least two anchor apparatuses, wherein the three-dimensional coordinate system established by the wireless access device and the at least two anchor apparatuses is a space rectangular coordinate system.

8. The method of claim 7, wherein acquiring, by the wireless access device, the position information of the terminal in the three-dimensional coordinate system established by the wireless access device and the at least two anchor apparatuses comprises:

  detecting, by the wireless access device, a distance between the wireless access device and the terminal and a distance between the wireless access device and each of the at least two anchor apparatuses, receiving a distance between the each of the at least two anchor apparatuses and the terminal from the each of the at least two anchor apparatuses, and calculating and acquiring the position information of the terminal in the three-dimensional coordinate system according to the distance between the wireless access device and the terminal, the distance between the wireless access device and the each of the at least two anchor apparatuses and the distance between the each of the at least two anchor apparatuses and the terminal; or
  detecting, by the wireless access device, the distance between the wireless access device and the terminal, receiving the distance between the each of the at least two anchor apparatuses and the wireless access device and the distance between the each of the at least two anchor apparatuses and the terminal from the each of the at least two anchor apparatuses, and calculating and acquiring the position information of the terminal in the three-dimensional coordinate system according to the distance between the wireless access device and the terminal, the distance between the each of the at least two anchor apparatuses and the wireless access device and the distance between the each of the at least two anchor apparatuses and the terminal; or
  receiving, by the wireless access device, the position information of the terminal from any one of the at least two anchor apparatuses.

9. The method of claim 8, wherein detecting, by the wireless access device, the distance between the wireless access device and the terminal and the distance between the wireless access device and the each of the at least two anchor apparatuses comprises:
  detecting, by the wireless access device through fine timing measurement, FTM, the distance between the wireless access device and the terminal and the distance between the wireless access device and the each of the at least two anchor apparatuses.

10. A method for determining a secure region, comprising:

after at least one predetermined terminal is connected to a wireless access device, acquiring position information of the at least one predetermined terminal in a three-dimensional coordinate system established by the wireless access device and an anchor apparatus, wherein each of the at least one predetermined terminal comprises a terminal identified as legitimate by the wireless access device; and
performing, according to the acquired position information of the at least one predetermined terminal in the three-dimensional coordinate system, at least one of: establishing a secure region of the wireless access device or adjusting the secure region of the wireless access device.

11. The method of claim 10, wherein after establishing the secure region of the wireless access device, the method further comprises at least one of following manners:

  adjusting, according to input information, the secure region of the wireless access device; or
  adjusting, according to preset information, the secure region of the wireless access device;

12. The method of claim 10 or 11, wherein at least two anchor apparatuses are provided, and the three-dimensional coordinate system established by the wireless access device and the at least two anchor apparatuses is a space rectangular coordinate system.

13. The method of claim 10, 11 or 12, wherein in a case where the method for determining a secure region is applied to the wireless access device, acquiring the position information of the at least one predetermined terminal in the three-dimensional coordinate system established by the wireless access device and the anchor apparatus comprises:

  detecting, by the wireless access device, a distance between the wireless access device and each of the at least one predetermined terminal and a distance between the wireless access device and the anchor apparatus, receiving a distance between the anchor apparatus and the each of the at least one predetermined terminal from the anchor apparatus, and calculating and acquiring the position information of the at least one predetermined terminal in the three-dimensional coordinate system according to the distance between the wireless access device and the each of the at least one predetermined terminal, the distance between the wireless access device and the anchor apparatus and the distance between the anchor apparatus and the each of the at least one predetermined terminal;

or

detecting, by the wireless access device, the distance between the wireless access device and the each of the at least one predetermined terminal, receiving the distance between the anchor apparatus and the wireless access device and the distance between the anchor apparatus and the each of the at least one predetermined terminal from the anchor apparatus, and calculating and acquiring the position information of the at least one predetermined terminal in the three-dimensional coordinate system according to the distance between the wireless access device and the each of the at least one predetermined terminal, the distance between the anchor apparatus and the wireless access device and the distance between the anchor apparatus and the each of the at least one predetermined terminal.

14. The method of claim 10, 11 or 12, wherein in a case where the method for determining a secure region is applied to the anchor apparatus, acquiring the position information of the at least one predetermined terminal in the three-dimensional coordinate system established by the wireless access device and the anchor apparatus comprises:

detecting, by the anchor apparatus, a distance between the anchor apparatus and each of the at least one predetermined terminal and a distance between the anchor apparatus and the wireless access device, receiving a distance between the wireless access device and the each of the at least one predetermined terminal from the wireless access device, and calculating and acquiring the position information of the at least one predetermined terminal in the three-dimensional coordinate system according to the distance between the anchor apparatus and the each of the at least one predetermined terminal, the distance between the anchor apparatus and the wireless access device and the distance between the wireless access device and the each of the at least one predetermined terminal; or detecting, by the anchor apparatus, the distance between the anchor apparatus and the each of the at least one predetermined terminal, receiving the distance between the wireless access device and the anchor apparatus and the distance between the wireless access device and the each of the at least one predetermined terminal from the wireless access device, and calculating and acquiring the position information of the at least one predetermined terminal in the three-dimensional coordinate system according to the distance between the anchor apparatus and the each of the at least one predetermined terminal, the distance between the wireless access device and the anchor apparatus and the distance between the wireless access device and the each of the at least one predetermined terminal.

15. The method of claim 10, wherein establishing the secure region of the wireless access device according to the acquired position information of the at least one predetermined terminal in the three-dimensional coordinate system comprises:
taking a three-dimensional space determined according to the acquired position information as the secure region of the wireless access device.

16. An access control apparatus, which is disposed in a wireless access device, comprising: a positioning module, a secure region detection module and an access control module; wherein
the positioning module is configured to acquire position information of a terminal in a three-dimensional coordinate system established by the wireless access device and an anchor apparatus;
the secure region detection module is configured to determine, according to the position information of the terminal in the three-dimensional coordinate system, whether the terminal is located in a secure region of the wireless access device; and
the access control module is configured to perform, according to the determination result, an access control operation corresponding to the determination result.

17. The apparatus of claim 16, further comprising a secure region determination module,
wherein the secure region determination module is configured to establish or adjust the secure region of the wireless access device by at least one of following manners:

establishing or adjusting, according to input information, the secure region of the wireless access device;
establishing or adjusting, according to preset information, the secure region of the wireless access device; or
establishing or adjusting the secure region of the wireless access device by acquiring position information of at least one predetermined terminal in the three-dimensional coordinate system after the at least one predetermined terminal is connected to the wireless access device, wherein each of the at least one predetermined terminal comprises a terminal identified as legitimate by the wireless access device.

18. The apparatus of claim 16 or 17, wherein the access control module comprises at least one of a first processing unit, a second processing unit and a third processing unit; wherein

the first processing unit is configured to in a case where the wireless access device detects that the terminal is successfully connected to the wireless access device, in response to determining that the terminal is located in the secure region of the wireless access device, allocate a traffic bandwidth meeting a first condition to the terminal, and in response to determining that the terminal is not located in the secure region of the wireless access device, allocate a traffic bandwidth meeting a second condition to the terminal or stop allocating the traffic bandwidth to the terminal; wherein the traffic bandwidth meeting the first condition is greater than the traffic bandwidth meeting the second condition;

the second processing unit is configured to in a case where the wireless access device detects that a number of continual connection failures of the terminal to the wireless access device within a predetermined time period meets a threshold condition, in response to determining that the terminal is located in the secure region of the wireless access device, stop a continual connection behavior of the terminal within a preset time period, and give a prompt for confirming whether the terminal is abnormal; and in response to determining that the terminal is not located in the secure region of the wireless access device, stop a connection behavior of the terminal and not respond to a request of the terminal; or

the third processing unit is configured to after the wireless access device periodically acquires position information of a terminal connected to the wireless access device, in response to determining that the terminal is located in the secure region of the wireless access device, allocate a traffic bandwidth meeting a third condition to the terminal; and in response to determining that the terminal is not located in the secure region of the wireless access device, allocate a traffic bandwidth meeting a fourth condition to the terminal; wherein the traffic bandwidth meeting the third condition is greater than the traffic bandwidth meeting the fourth condition.

19. An apparatus for determining a secure region, comprising: a positioning module and a processing module, wherein

the positioning module is configured to after at least one predetermined terminal is connected to a wireless access device, acquire position information of the at least one predetermined terminal in a three-dimensional coordinate system established by the wireless access device and an anchor apparatus, wherein each of the at least one predetermined terminal comprises a terminal identified as legitimate by the wireless access device; and

the processing module is configured to perform, according to the acquired position information of the at least one predetermined terminal in the three-dimensional coordinate system, at least one of: establishing a secure region of the wireless access device or adjusting the secure region of the wireless access device.

20. The apparatus of claim 19, further comprising at least one of a first adjustment module and a second adjustment module, wherein

the first adjustment module is configured to adjust, according to input information, the secure region of the wireless access device; and

the second adjustment module is configured to adjust, according to preset information, the secure region of the wireless access device.

21. An access control system, comprising: an anchor apparatus and a wireless access device, wherein the wireless access device is configured with the access control apparatus of any one of claims 16 to 18, and the anchor apparatus is connected to the wireless access device.

22. A wireless access device, comprising: a memory, a processor and an access control program stored on the memory and executable by the processor, wherein when executed by the processor, the access control program implements the access control method of any one of claims 1 to 9.

23. A machine-readable medium, which is configured to store an access control program, wherein when executed by a processor, the access control program implements the access control method of any one of claims 1 to 9.

| A wireless access device acquires position information of a terminal in a three-dimensional coordinate system established by the wireless access device and an anchor apparatus | S101 |

| Determine, according to the position information of the terminal in the three-dimensional coordinate system, whether the terminal is located in a secure region of the wireless access device | S102 |

| Perform, according to a determination result, an access control operation corresponding to the determination result | S103 |

**FIG. 1**

**FIG. 2**

**FIG. 3**

**FIG. 4**

A wireless router starts a secure region learning mode ∿ S501

↓

A legitimate terminal is connected to the wireless router ∿ S502

↓

The wireless router performs horizontal secure region learning ∿ S503

↓

The wireless router performs vertical secure region learning ∿ S504

↓

∿ S505
The wireless router closes the secure region learning mode

The wireless router enters a normal operation mode ∿ S506

↓

Detect position information of the terminal ∿ S507

↓

∿ S508
Is the terminal located in a horizontal secure region? —No→

↓ Yes

∿ S509
Is the terminal located in a vertical secure region? —No→

↓ Yes

The terminal is located in the secure region of the wireless router ∿ S511

∿ S510
The terminal is not located in a secure region of the wireless router

**FIG. 5**

Vertical secure region

H2

((•))Wireless router

H1

Horizontal secure region

Terminal

**FIG. 6**

**FIG. 7**

**FIG. 8**

A WiFi terminal is connected to a wireless router ⟶ S901

↓

Detect position information of the WiFi terminal ⟶ S902

↓

S903

Is the WiFi terminal located in the secure region? ⟶No⟶ Allocate no traffic bandwidth to the WiFi terminal ⟶ S905

Yes

↓

Allocate a sufficient traffic bandwidth to the WiFi terminal ⟶ S904

**FIG. 9**

A WiFi terminal faces continual connection failures within a short time period, and the number of failures exceeds a threshold ⟶ S1001

↓

Detect position information of the WiFi terminal ⟶ S1002

↓

S1003

Is the WiFi terminal located in a secure region? ⟶No⟶ Completely stop and shield the connection attempts of the Wi-Fi terminal ⟶ S1005

Yes

↓

Notify an administrator and temporarily stop connection attempts of the WiFi terminal ⟶ S1004

**FIG. 10**

A wireless router periodically performs a positioning operation on each connected WiFi terminal at intervals of predetermined duration — S1101

Is the WiFi terminal located in a secure region? — S1102

No → Half the traffic bandwidth allocated to the WiFi terminal — S1104

Yes → Allocate a sufficient traffic bandwidth to the WiFi terminal — S1103

**FIG. 11**

First positioning module — 1201

Secure region detection module — 1202

Secure region determination module — 1204

Access control module — 1203

**FIG. 12**

After one or more predetermined terminals are connected to a wireless access device, acquire position information of the one or more predetermined terminals in a three-dimensional coordinate system established by the wireless access device and an anchor apparatus — S1301

Perform, according to the acquired position information of the one or more predetermined terminals in the three-dimensional coordinate system, at least one of: establishing a secure region of the wireless access device or adjusting the secure region of the wireless access device — S1302

**FIG. 13**

Second positioning module — 1401

Processing module — 1402

First adjustment module — 1403

Second adjustment module — 1404

**FIG. 14**

# INTERNATIONAL SEARCH REPORT

International application No.

PCT/CN2018/085983

## A. CLASSIFICATION OF SUBJECT MATTER

H04W 4/02 (2018.01) i; H04W 12/08 (2009.01) n; H04W 48/02 (2009.01) n; H04W 48/04 (2009.01) n

According to International Patent Classification (IPC) or to both national classification and IPC

## B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; 3GPP; IEEE: 接入, 控制, 允许, 准许, 拒绝, 安全, 区域, 范围, 地理, 围栏, 边界, 定位, 限制, 三维, access, control, allow, reject, refuse, deny, safe, security, area, bound, geography, location, limit, three dimension

## C. DOCUMENTS CONSIDERED TO BE RELEVANT

| Category* | Citation of document, with indication, where appropriate, of the relevant passages | Relevant to claim No. |
|---|---|---|
| PX | CN 107396303 A (ZTE CORP.), 24 November 2017 (24.11.2017), description, paragraphs [0002]-[0072] | 1-23 |
| X | US 2013212204 A1 (QUALCOMM ATHEROS INC. et al.), 15 August 2013 (15.08.2013), description, paragraphs [0020]-[0023], and figures 2A and 2B | 1-7, 16-18, 21-23 |
| A | CN 106792542 A (SHENZHEN TINNO WIRELESS TECHNOLOGY CO., LTD.), 31 May 2017 (31.05.2017), entire document | 1-23 |

☐ Further documents are listed in the continuation of Box C.          ☒ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 25 June 2018 | 18 July 2018 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | CHEN, Xiaoxia Telephone No. (86-512) 88996090 |

Form PCT/ISA/210 (second sheet) (January 2015)

## INTERNATIONAL SEARCH REPORT
### Information on patent family members

International application No.

PCT/CN2018/085983

| Patent Documents referred in the Report | Publication Date | Patent Family | Publication Date |
|---|---|---|---|
| CN 107396303 A | 24 November 2017 | None | |
| US 2013212204 A1 | 15 August 2013 | WO 2013119572 A3 | 26 September 2013 |
| | | WO 2013119572 A2 | 15 August 2013 |
| CN 106792542 A | 31 May 2017 | None | |

Form PCT/ISA/210 (patent family annex) (January 2015)